# EUROPEAN PATENT APPLICATION

(11) **EP 4 772 589 A1**
(43) Date of publication of application: **08.07.2026**
(21) Application number: 24858231.4
(22) Date of filing: 05.08.2024
(51) Int. Cl.: C09J 7/10, C09J 7/35, C09J 175/04

(54) **MATTE TPU HOT MELT ADHESIVE FILM AND PREPARATION METHOD THEREFOR**

(30) Priority: 30.08.2023 CN 202311107836
(71) Applicant: Guangdong Zhongding Technology Development Co., Ltd., Dongguan, Guangdong 523275 (CN)
(72) Inventor: LI, Feng, Dongguan, Guangdong 523275 (CN); LIU, Yongzhong, Dongguan, Guangdong 523275 (CN)
(74) Representative: JD&P Patent Attorneys Joanna Dargiewicz & Partners
(86) International application number: PCT/CN2024/109784
(87) International publication number: WO 2025/044688

(57) **Abstract**

The present disclosure relates to the technical field of hot melt adhesive membrane, in particular to a matte TPU hot melt adhesive membrane and a preparation method thereof. The matte TPU hot melt adhesive membrane includes the following components in parts by weight: 50-70 parts of polyurethane prepolymer, 10-30 parts of matting agent, 1-3 parts of filler, 1-3 parts of antioxidant, 1-3 parts of diluent, 5-10 parts of polyvinyl alcohol, and 2-8 parts of tackifying resin. The matte TPU hot melt adhesive membrane of the present disclosure has excellent adhesion strength and tensile strength, as well as good matte effect, achieving the effect of hot pressing without glossy. The outer edge of the bonding position with the process components has no obvious traces of hot melt adhesive fusion, and the appearance is beautiful and attractive. The preparation method of matte TPU hot melt adhesive membrane is simple in process, easy to control in operation, which is conducive to industrial production.

## Description

### CROSS-REFERENCE

This application is a continuation of International Application No. PCT/CN2024/109784 with a filling date of August 05, 2024, designating the United states, now pending, and further claims to the benefit of priority from Chinese Application No. 202311107836.7 with a filing date of August 30, 2023. The content of the aforementioned applications, including any intervening amendments thereto, are incorporated herein by reference.

### TECHNICAL FIELD

The present disclosure relates to the technical field of hot melt adhesive film, in particular to a matte thermoplastic polyurethane (TPU) hot melt adhesive film and a preparation method thereof.

### BACKGROUND

Hot melt adhesive film can be used for bonding components of optoelectronic devices, electronic products, household appliances, furniture, shoe components, finished shoes, sportswear, etc. The application of polyester hot melt adhesive film in this field has attracted attention. However, the current polyester hot melt adhesive film still has some disadvantages, such as not having matte performance. For the devices used, especially organic light emitting diodes (OLED), the reflectivity is enhanced, making it necessary to perform mat finish or matting treatment.

There are also some methods reported in the existing technology to achieve matte effect, but these methods also have some deficiencies, such as the loss of material mechanical properties, thermal stability, and bonding performance of hot melt adhesive in order to increase the matting effect. Therefore, in this field, it is expected to develop a material that can have both matte finish and mechanical properties of hot melt adhesive.

### SUMMARY

In order to overcome the shortcomings and deficiencies in the existing technology, the purpose of the present disclosure is to provide a matte TPU hot melt adhesive film, which has excellent tensile strength and good matte effect, achieving the effect of hot pressing without glossy.

The preparation method of the matte TPU hot melt adhesive film of the present disclosure is simple in process, easy to control in operation, which is conducive to industrial production. The matte TPU hot melt adhesive film produced has excellent adhesion and tensile strength, as well as good matte effect, achieving the effect of hot pressing without glossy. The outer edge of the bonding position with the process components has no obvious traces of hot melt adhesive fusion, beautiful appearance, and superior comprehensive performance.

The objective of the present disclosure is achieved through the following technical solution: the matte TPU hot melt adhesive film includes the following components in parts by weight: 50-70 parts of polyurethane prepolymer, 10-30 parts of matting agent, 1-3 parts of filler, 1-3 parts of antioxidant, 1-3 parts of diluent, 5-10 parts of polyvinyl alcohol, and 2-8 parts of tackifying resin.

Further, the polyvinyl alcohol is polyvinyl alcohol PVA0588 from Kuraray Co., Ltd.

Further, the diluent is at least one of isooctyl acrylate, butyl acrylate, acrylic acid, methyl acrylate, ethyl acetate, toluene, dibutyl phthalate, and diisobutyl phthalate.

Further, the antioxidant includes at least one of antioxidant 1010, antioxidant 1076, antioxidant 168, and 2,6-di-tert-butyl-4-methylphenol.

Further, the filler is at least one of cryolite, calcium carbonate, wollastonite, talc powder, fumed silica, quartz sand, aluminum powder, and zinc powder.

Further, the tackifying resin is a mixture composed of hydrogenated rosin glycerol ester, terpene resin, and hydrocarbon resin in a weight ratio of 0.8-1.2 : 0.1-0.5 : 0.6-1.0.

Preferably, the hydrogenated rosin glycerol ester adopts the model of GEHR-85R from Guangxi Wuzhou Sun Shine Forestry & Chemicals Co., Ltd. with a softening point of 80-90 °C; the terpene resin is mainly composed of poly-α-pinene from Fujian Shaxian Wanli Chemical Co., Ltd., with a softening point of 90-100 °C; the hydrocarbon resin adopts hydrocarbon resin FTR6100 of Mitsui.

Further, the matting agent is compounded by nitrile butadiene rubber, modified epoxy resin, and styrene butadiene rubber.

Further, the weight ratio of the nitrile butadiene rubber, the modified epoxy resin, and the styrene butadiene rubber is 2-4 : 5-8 : 3-5.

Preferably, the nitrile butadiene rubber adopts the nitrile butadiene rubber 1051 from Dongguan Mingyuan Plastic Co., Ltd.; the styrene butadiene rubber adopts the styrene butadiene rubber 1502 from Sinopec Qilu Petrochemical Company.

Further, the modified epoxy resin includes the following components in parts by weight: 45-55 parts of epoxy resin, 10-15 parts of polycarbonate diol, 1-3 parts of polymerization inhibitor, and 1-3 parts of catalyst B.

Further, the preparation method of the modified epoxy resin is as follows: dissolving the epoxy resin in butyl acrylate, then adding the polycarbonate diol, the polymerization inhibitor, and the catalyst B, then heating the mixture to 80-100°C for 3-4 hours for reaction, and keeping the temperature for 1-2 hours for reaction to obtain modified epoxy resin.

Further, the polycarbonate diol adopts PCDL1000.

Further, the catalyst B is one of tetrabutylammonium bromide and triethylamine.

Further, the polymerization inhibitor is 4-Methoxyphenol.

Further, the epoxy resin is bisphenol A epoxy resin. Preferably, the bisphenol A epoxy resin is from Shanghai Complex High tech Materials Co., Ltd. with an epoxy value of 0.46.

Further, the polyurethane prepolymer includes the following components in parts by weight: 45-55 parts of isophorone diisocyanate, 55-75 parts of polyglycol, 1-2 parts of catalyst A, and 1-8 parts of capping agent.

Further, the polyglycol is at least one of polyethylene glycol, poly tetramethylene ether glycol, and polycaprolactone diol.

Further, the capping agent is at least one of glycidol, hydroxyl terminated polydimethylsiloxane, and isopropanol.

Further, the catalyst A is at least one of dibutyltin dilaurate and stannous octoate.

Further, the preparation method of the polyurethane prepolymer includes the following steps:
(1) Adding the polyglycol and the catalyst A into a reaction kettle, heating up to 130-150 °C, vacuuming for 2-2.5 hours to remove water, cooling down to 90-110 °C, adding the catalyst A and isophorone diisocyanate, and reacting for 2.5-3.5 hours to obtain product A;
(2) When the system temperature is cooled to 80-100 °C, adding the capping agent dropwise into the product A slowly, keeping a reaction for 1-2 hours at 80-100 °C after the dropwise addition is complete, and then cooling to room temperature to obtain polyurethane prepolymer.

A preparation method for the matte TPU hot melt adhesive film, including the following steps: dehumidifying and drying the polyvinyl alcohol, the tackifying resin, the matting agent, the antioxidant, the diluent, and the filler, then adding the polyurethane prepolymer to mix evenly, then performing melt blending extrusion, casting, cooling, trimming, and winding to obtain the matte TPU hot melt adhesive film.

Further, the dehumidifying and drying are carried out in a dehumidification dryer, with a temperature of 70-90°C and a time of 3-4 hours; the melt blending is carried out in a casting machine, with a melt blending temperature of 100-180°C.

It should be further explained that the raw material of the matte TPU hot melt adhesive film is melted by the screw of the casting machine and pushed into the mold head, and then cast into a film with a certain thickness by the die head, and then rapidly cooled into a thin film on the cooling wheel.

Further, the thickness of the matte TPU hot melt adhesive film is 0.05-0.3mm. The die lip gap size of the adjustable die head can be adjusted as needed to control the thickness of the hot melt adhesive film.

The preparation method of the matte TPU hot melt adhesive film of the present disclosure is simple in process, easy to control in operation, which is conducive to industrial production. The matte TPU hot melt adhesive film produced has excellent adhesion and tensile strength, as well as good matte effect, achieving the effect of hot pressing without brightening. The outer edge of the bonding position with the process components has no obvious traces of hot melt adhesive fusion, beautiful appearance, and superior comprehensive performance.

The advantageous effects of the present disclosure are:
The matte TPU hot melt adhesive film of the present disclosure has excellent tensile strength and bonding strength, as well as good matte effect, achieving the effect of hot pressing without glossy. The outer edge of the joint position with the process components has no obvious traces of hot melt adhesive fusion, and the appearance is beautiful and attractive. The preparation method of the matte TPU hot melt adhesive film is simple in process and easy to control, which is conducive to industrial production.

### BRIEF DESCRIPTION OF THE DRAWINGS

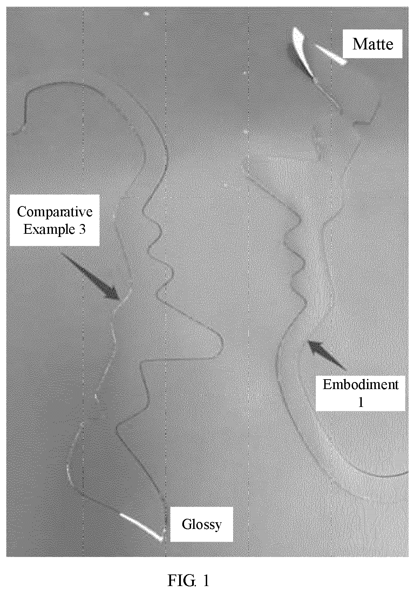

FIG. 1 shows the product images of Embodiment 1 and Comparative Example 3 (the product image on the left side is comparative example 3, and the product image on the right is Embodiment 1).

### DETAILED DESCRIPTION OF THE EMBODIMENTS

In order to facilitate the understanding of those skilled in the art, the present disclosure will be further explained in conjunction with the embodiments below. The content mentioned in the embodiments is not a limitation of the present disclosure.

### Embodiment 1

A matte TPU hot melt adhesive film includes the following components in parts by weight: 65 parts of polyurethane prepolymer, 25 parts of matting agent, 1.5 parts of filler, 2 parts of antioxidant, 2 parts of diluent, 8 parts of polyvinyl alcohol, and 7 parts of tackifying resin.

Further, the polyvinyl alcohol is polyvinyl alcohol PVA0588 from Kuraray Co., Ltd.

Further, the diluent is dibutyl phthalate.

Further, the antioxidant is antioxidant 1010.

Further, the filler is calcium carbonate. Preferably, the average particle size of the calcium carbonate is 4000-6000 mesh.

Further, the tackifying resin is a mixture composed of hydrogenated rosin glycerol ester, terpene resin, and hydrocarbon resin in a weight ratio of 1 : 0.3 : 0.7.

Further, the hydrogenated rosin glyceride adopts the model of GEHR-85R from Guangxi Wuzhou Sun Shine Forestry & Chemicals Co., Ltd., with a softening point of 80-90 °C; the terpene resin is mainly composed of poly-α-pinene from Fujian Shaxian Wanli Chemical Co., Ltd., with a softening point of 90-100 °C; the hydrocarbon resin adopts hydrocarbon resin FTR6100 of Mitsui.

Further, the matting agent is compounded by nitrile butadiene rubber, modified epoxy resin, and styrene butadiene rubber.

Further, the weight ratio of the nitrile butadiene rubber, the modified epoxy resin, and the styrene butadiene rubber is 3 : 6 : 4.

Further, the nitrile butadiene rubber adopts the model of 1051 from Dongguan Mingyuan Plastic Co., Ltd.; the styrene butadiene rubber adopts the model of 1502 from Sinopec Qilu Petrochemical Company.

Further, the modified epoxy resin includes the following components in parts by weight: 50 parts of epoxy resin, 12 parts of polycarbonate diol, 1.5 parts of polymerization inhibitor, and 1.2 parts of catalyst B.

Further, the polycarbonate diol adopts PCDL1000.

Further, the preparation method of the modified epoxy resin is as follows: dissolving the epoxy resin in butyl acrylate at room temperature, then adding the polycarbonate diol, the polymerization inhibitor, and the catalyst B, then heating the mixture to 90°C for 3-4 hours for reaction, and keeping the temperature for 1.5 hours for reaction to obtain modified epoxy resin.

Further, the catalyst B is tetrabutylammonium bromide.

Further, the polymerization inhibitor is 4-Methoxyphenol.

Further, the epoxy resin is bisphenol A epoxy resin. The bisphenol A epoxy resin is from Shanghai Complex High tech Materials Co., Ltd with an epoxy value of 0.46.

Further, the polyurethane prepolymer includes the following components in parts by weight: 50 parts of isophorone diisocyanate, 70 parts of polyethylene glycol, 1.5 parts of catalyst A, and 7 parts of capping agent.

Further, the polyethylene glycol used is polyethylene glycol 1000.

Further, the capping agent is glycidol.

Further, the catalyst A is dibutyltin dilaurate.

Further, the preparation method of the polyurethane prepolymer includes the following steps:
(1) Adding the polyethylene glycol and the catalyst A into the reaction kettle, heating up to 115 °C, vacuuming for 2 hours to remove water, cooling down to 100 °C, adding isophorone diisocyanate, and reacting for 3 hours to obtain product A;
(2) When the temperature is cooled to 90 °C, adding the capping agent dropwise into the product A slowly, keeping a reaction for 1.5 hours at 90 °C after the dropwise addition is complete, and then cooling to room temperature to obtain polyurethane prepolymer.

A preparation method for the matte TPU hot melt adhesive film, including the following steps: dehumidifying and drying the polyvinyl alcohol, the tackifying resin, the matting agent, the antioxidant, the diluent, and the filler, then adding the polyurethane prepolymer to mix evenly, then performing melt blending and extrusion, casting, cooling, trimming, and winding to obtain the matte TPU hot melt adhesive film.

Further, the dehumidifying and drying are carried out in a dehumidification dryer, with a temperature of 85 °C and a time of 3.5 hours; the melt blending is carried out in a casting machine, with a melting blending temperature of 165 °C.

### Embodiment 2

In this embodiment, the polyurethane prepolymer includes the following components in parts by weight: 50 parts of isophorone diisocyanate, 70 parts of poly tetramethylene ether glycol, 1.5 parts of catalyst A, and 7 parts of capping agent.

Further, the poly tetramethylene ether glycol is poly tetramethylene ether glycol 1000.

Further, the capping agent is hydroxyl terminated polydimethylsiloxane. The molecular number (Mn) of the hydroxyl terminated polydimethylsiloxane is 1000.

Further, the catalyst A is dibutyltin dilaurate.

Further, the preparation method of the polyurethane prepolymer includes the following steps:
(1) Adding the poly tetramethylene ether glycol and the catalyst A into a reaction kettle, heating up to 115 °C, vacuuming for 2 hours to remove water, cooling down to 100 °C, adding the isophorone diisocyanate, and reacting for 3 hours to obtain product A;
(2) When the system temperature is cooled to 95 °C, adding the capping agent dropwise into the product A slowly, keeping a reaction for 2 hours at 95 °C after the dropwise addition is complete, and then cooling to room temperature to obtain polyurethane prepolymer.

The remaining content of this embodiment is the same as that of embodiment 1.

### Embodiment 3

In this embodiment, the polyurethane prepolymer includes the following components in parts by weight: 50 parts of isophorone diisocyanate, 70 parts of polycaprolactone diol, 1.5 parts of catalyst A, and 7 parts of capping agent.

Further, the polycaprolactone diol is polycaprolactone diol 1000.

Further, the capping agent is isopropanol.

Further, the catalyst A is dibutyltin dilaurate.

Further, the preparation method of the polyurethane prepolymer includes the following steps:
(1) Adding the polycaprolactone diol and the catalyst A into a reaction kettle, heating up to 115 °C, vacuuming for 2 hours to remove water, cooling down to 100 °C, adding the isophorone diisocyanate, and reacting for 3 hours to obtain product A;
(2) When the system temperature is cooled to 95 °C, adding the capping agent dropwise into the product A slowly, keeping a reaction for 2 hours at 95°C after the dropwise addition is complete, and then cooling to room temperature to obtain polyurethane prepolymer.

Further, the weight ratio of the nitrile butadiene rubber, the modified epoxy resin, and the styrene butadiene rubber is 4 : 6 : 5.

A preparation method for the matte TPU hot melt adhesive film, including the following steps: dehumidifying and drying the polyvinyl alcohol, the tackifying resin, the matting agent, the antioxidant, the diluent, and the filler, then adding the polyurethane prepolymer to mix evenly, then performing melt blending extrusion, casting, cooling, trimming, and winding to obtain the matte TPU hot melt adhesive film.

Further, the dehumidifying and drying are carried out in a dehumidification dryer, with a temperature of 85 °C and a time of 3.8 hours; the melt blending is carried out in a casting machine, with a melting blending temperature of 170 °C.

The remaining content of this embodiment is the same as that of embodiment 1.

### Comparative Example 1

The difference between this comparative example and the Embodiment 1 is that the modified epoxy resin in the matting agent is replaced with an equal amount of bisphenol A epoxy resin. The bisphenol A epoxy resin is a bisphenol A epoxy resin with an epoxy value of 0.46 from Shanghai Complex High tech Materials Co., Ltd.

### Comparative Example 2

The difference between this comparative example and the Embodiment 1 is that the matting agent only contains styrene butadiene rubber.

### Comparative Example 3

The difference between this comparative example and the Embodiment 1 is that the hot melt adhesive film does not include a matting agent, which is replaced by an equal amount of tackifying resin.

### Performance Testing

Performance tests on the matte TPU hot melt adhesive films produced in Embodiments 1-3 and Comparative Examples 1-3 is conducted. The thickness of the matte TPU hot melt adhesive film produced in Embodiments 1-3 and Comparative Examples 1-3 was controlled at 0.05mm. The tensile strength, high-temperature bonding strength, and surface glossiness at 60°(matte effect) of the matte TPU hot melt adhesive film were tested, and the test data are shown in Table 1 below:

**Table 1**

| Items | tensile strength/MPa | high-temperature bonding strength/MPa | surface glossiness at 60° | effect of melt blending and extrusion |
|---|---|---|---|---|
| Embodiment 1 | 24 | 12.8 | 13.9 | Good extrusion effect, good matte effect, smooth and delicate surface, non-transparent. |
| Embodiment 2 | 27 | 14.4 | 12.9 | Good extrusion effect, good matte effect, smooth and delicate surface, non-transparent. |
| Embodiment 3 | 25 | 13.6 | 13.5 | Good extrusion effect, good matte effect, smooth and delicate surface, non-transparent. |
| Comparative Example 1 | 22 | 12.6 | 24.7 | Ordinary matte effect, smooth and delicate surface, slightly transparent. |
| Comparative Example 2 | 21 | 12.3 | 30.5 | Ordinary matte effect, smooth and delicate surface, slightly transparent. |
| Comparative Example 3 | 18 | 12.5 | 64.6 | No matte effect, smooth and delicate surface, transparent. |

The determination of tensile strength is based on *Adhesives-Determination of tensile lap-shear strength of rigid-to-rigid bonded assemblies (GB*/*T 7124-2008 )*.

High temperature bonding test: the adhesive is applied to the substrate, and the two substrates are joined and pressed. After complete curing, the two substrates are placed in a baking oven with 85 °C and heated for 4 hours. The sample was taken out and placed at room temperature for 2 hours, and then tested on the tensile machine. The selected substrate is TPU film, and the TPU film is selected from the model ZD-135CM * 85A TPU film of Guangdong Zhongding Technology Development Co., Ltd., with a thickness of 0.7mm.

The determination of surface glossiness is based on *test method for specular gloss of plastics (GB*/*T 8807-1988).*

As shown in FIG. 1, the figure on the left is formed by hot pressing the matte TPU hot melt adhesive film of the Comparative Example 3 without adding matting agent. The formed edge surface is smooth and delicate, but has high reflectivity and no matte effect, showing obvious traces of hot melt adhesive fusion. While the figure on the right is formed by hot pressing the matte TPU hot melt adhesive film from the Embodiment 1, and the formed edge pressing surface is smooth and delicate, with almost no reflectivity, good matte effect, and no obvious traces of hot melt adhesive fusion.

The above embodiments are the preferred implementation schemes of the present disclosure. In addition, the present disclosure can also be implemented in other ways, and any obvious substitution is within the scope of protection of the present disclosure without departing from the disclosure concept.

## Claims

1. A matte TPU hot melt adhesive film, **characterized by** comprising the following components in parts by weight: 50-70 parts of polyurethane prepolymer, 10-30 parts of matting agent, 1-3 parts of filler, 1-3 parts of antioxidant, 1-3 parts of diluent, 5-10 parts of polyvinyl alcohol, and 2-8 parts of tackifying resin.

2. The matte TPU hot melt adhesive film according to claim 1, **characterized in that** the matting agent is compounded by nitrile butadiene rubber, modified epoxy resin, and styrene butadiene rubber.

3. The matte TPU hot melt adhesive film according to claim 2, **characterized in that** a weight ratio of the nitrile butadiene rubber, the modified epoxy resin, and the styrene butadiene rubber is 2-4 : 5-8 : 3-5.

4. The matte TPU hot melt adhesive film according to claim 2, **characterized in that** the modified epoxy resin comprises the following components in parts by weight: 45-55 parts of epoxy resin, 10-15 parts of polycarbonate diol, 1-3 parts of polymerization inhibitor, and 1-3 parts of catalyst B.

5. The matte TPU hot melt adhesive film according to claim 1, **characterized in that** the diluent is at least one selected from the group consisting of isooctyl acrylate, butyl acrylate, acrylic acid, methyl acrylate, ethyl acetate, toluene, dibutyl phthalate, and diisobutyl phthalate.

6. The matte TPU hot melt adhesive film according to claim 1, **characterized in that** the polyurethane prepolymer comprises the following components by weight: 45-55 parts of isophorone diisocyanate, 55-75 parts of polyglycol, 1-2 parts of catalyst A, and 1-8 parts of capping agent.

7. The matte TPU hot melt adhesive film according to claim 6, **characterized in that** the polyglycol comprises at least one of polyethylene glycol, poly tetramethylene ether glycol, and polycaprolactone diol.

8. The matte TPU hot melt adhesive film according to claim 6, **characterized in that** the capping agent is at least one selected from the group consisting of glycidol, hydroxyl terminated polydimethylsiloxane, and isopropanol.

9. The matte TPU hot melt adhesive film according to claim 6, **characterized in that** the preparation method of the polyurethane prepolymer comprises the following steps:
(1) adding the polyglycol and the catalyst A into a reaction kettle, heating up to 130-150 °C, vacuuming for 2-2.5 hours to remove water, cooling down to 90-110 °C, adding isophorone diisocyanate, and reacting for 3 hours to obtain product A;
(2) when the system temperature is cooled to 80-100 °C, adding the capping agent dropwise into the product A slowly, keeping a reaction for 1-2 hours at 80-100 °C after the dropwise addition is complete, and then cooling to room temperature to obtain polyurethane prepolymer.

10. A preparation method for the matte TPU hot melt adhesive film according to any one of claims 1-9, **characterized in that** the preparation method comprises: dehumidifying and drying the polyvinyl alcohol, the tackifying resin, the matting agent, the antioxidant, the diluent, and the filler, then adding the polyurethane prepolymer to mix evenly, then performing melt blending and extrusion, casting, cooling, trimming, and winding to obtain the matte TPU hot melt adhesive film..
